# EUROPÄISCHE PATENTANMELDUNG

(11) **EP 1 798 244 A1**
(43) Veröffentlichungstag der Anmeldung: **20.06.2007**
(21) Anmeldenummer: 05027440.6
(22) Anmeldetag: 15.12.2005
(51) Int. Cl.: C08F 2/22, C08F 214/06

(54) **Verfahren zur Herstellung von wässrigen Vinylchlorid-(Meth)Acrylat-Copolymerisaten**

(71) Anmelder: VESTOLIT GmbH & Co. KG, 45772 Marl (DE)
(72) Erfinder: Brizzolara, Davide, 45701 Herten (DE)
(74) Vertreter: polypatent

(57) **Zusammenfassung**

Gegenstand der Erfindung ist ein Verfahren zur Herstellung wässriger Emulsionspolymerisate in semikontinuierlicher Verfahrensweise von Vinylchlorid-(Meth)Acrylat-Copolymeren, die gegebenenfalls noch ein oder mehrere Comonomere mit funktionellen Gruppen in einer Menge von 0,01 bis 10 Gew-% enthalten, das sich durch einen besonders leichten Start der Polymerisation, die Möglichkeit der Steuerung der Teilchengröße und durch eine gleichmäßige Verteilung der Monomere in der Polymerkette auszeichnet, das dadurch gekennzeichnet ist, dass 5 Gew-% bis 10 Gew-% der Monomere bezogen auf die Menge an Gesamtmonomeren vorgelegt wird, wobei der Anteil des Vinylchlorids an den vorgelegten Monomeren 50 Gew-% bis 100 Gew-% beträgt und nach Zugabe des Initiators erst nach einem Druckabfall von 0,5 bis 1,0 bar im Kessel mit der Zugabe des Emulgators begonnen wird und nach einem Druckabfall von 1,5 bis 3,5 bar gegenüber dem Ausgangsdruck im Reaktor mit der Zugabe der Monomere begonnen wird.

## Beschreibung

Gegenstand der Erfindung ist ein Verfahren zur Herstellung wässriger Emulsionspolymerisate in semikontinuierlicher Verfahrensweise von Vinylchlorid-(Meth)Acrylat-Copolymeren, die gegebenenfalls noch ein oder mehrere Comonomere mit funktionellen Gruppen in einer Menge von 0,01 bis 10 Gew-% enthalten, das sich durch einen besonders leichten Start der Polymerisation, die Möglichkeit der Steuerung der Teilchengröße und durch eine gleichmäßige Verteilung der Monomere in der Polymerkette auszeichnet, das dadurch gekennzeichnet ist, dass 5 Gew-% bis 10 Gew-% der Monomere bezogen auf die Menge an Gesamtmonomeren vorgelegt wird, wobei der Anteil des Vinylchlorids an den vorgelegten Monomeren 50 Gew-% bis 100 Gew-% beträgt und nach Zugabe des Initiators erst nach einem Druckabfall von 0,5 bis 1,0 bar im Kessel mit der Zugabe des Emulgators begonnen wird und nach einem Druckabfall von 1,5 bis 3,5 bar gegenüber dem Ausgangsdruck im Reaktor mit der Zugabe der Monomere begonnen wird.

Das erfindungsgemäße Verfahren ermöglicht die Polymerisation von Vinylchlorid-(Meth)Acrylat-Copolymeren, die gegebenenfalls noch ein oder mehrere Comonomere mit funktionellen Gruppen enthalten können, im semikontinuierlichen Emulsionsverfahren, das sich durch einen leichten Start der Polymerisation, eine enge Teilchengrößenverteilung und eine gleichmäßige Verteilung der Monomere in der Kette auszeichnet.

Bereits in den 30iger Jahren sind die ersten Veröffentlichungen über Vinylchlorid-(Meth)Acrylat-Copolymere erschienen (H. Kainer, Polyvinylchlorid und Vinylchlorid-Mischpolymerisate, Chemie, Physik und Technologie der Kunststoffe in Einzeldarstellung, Springer-Verlag, 1965, Berlin, Heidelberg, New York). Aufgrund der unterschiedlichen Copolymerisationsparameter mit den meisten (Meth)Acrylaten (r(VC)=0,1, r(BA)=5; r(VC)=0,1, r(MMA)=10) ist es schwierig homogene Copolymere herzustellen. Aufgrund dieser Schwierigkeit haben bis heute Terpolymere mit Vinylidenchlorid und/ oder Ethylen oder Copolymere des Vinylchlorids mit Ethylen und / oder Vinylacetat größere Bedeutung als Bindemittel für Farben und Beschichtungen erlangt.

In der EP0030080 wird die Herstellung einer wässrigen Dispersion bestehend aus Vinylidenchlorid, Vinylchlorid, (Meth)Acrylaten und optional Acrylsäure beschrieben. Dabei wird der größte Teil und vorzugsweise das gesamte Vinylchlorid mit einem Teil der (Meth)Acrylate vorgelegt und die restlichen Monomere über einen Zeitraum von 5 h zudosiert. Aufgrund der relativ günstigen Copolymerisationsparameter von Vinylidenchlorid und Vinylchlorid und vor allem aufgrund der günstigen Copolymerisation von Vinylidenchlorid mit den meisten (Meth)Acrylaten werden bei einer "Semi-Batch-Fahrweise" homogene Copolymere erhalten. Bei gleicher Verfahrensweise ohne Vinylidenchlorid würden uneinheitliche Vinylchlorid-(Meth)Acrylat-Copolymere entstehen.

Bei der Copolymerisation von Vinylchlorid mit (Meth)Acrylaten erfolgt nur bei einem kleinen Monomerpolster durch Ausschaltung der Copolymerisationsparameter die zufällige Polymerisation der Monomere miteinander. Darum ist es heute Stand der Technik in einer semikontinuierlichen wässrigen Emulsionspolymerisation Vinylchlorid-(Meth)AcrylatCopolymere herzustellen. Die Monomere werden in einer solchen Geschwindigkeit dosiert, dass sich kein größeres Monomerpolster aufbauen kann. Durch Nachführung von Initiator und Emulgator wird die Reaktion aufrechterhalten und die Grenzfläche der wachsenden Teilchen stabilisiert. Nach beendeter Reaktion wird die Temperatur für einen bestimmten Zeitraum beibehalten, um den Umsatz zu erhöhen. Die semikontinuierliche Verfahrensweise hat jedoch bei der Copolymerisation von Monomeren mit sehr unterschiedlichen Copolymerisationsparametern Nachteile bezüglich des Reaktionsstarts. Häufig setzt die Reaktion nur verzögert oder gar nicht ein und bei zu schneller Dosierung der Monomere bildet sich rasch ein größeres Monomerpolster. Durch eine zu schnelle Dosierung des Emulgators in der Anfangsphase der Polymerisation wird eine Steuerung der Teilchengrößenverteilung erschwert und es kann leicht vorkommen, dass die Reaktion wieder zum Erliegen kommt.

Vernetzungsfähige Vinylchlorid-(Meth)Acrylat-Copolymere haben sich in Lacken und High-Solid-Beschichtungen bewährt (Pourahmady, Naser; Bak, Philip I. Polymeric Science and Engineering (1990), 63, 427-31). Durch Verwendung einer externen Saat kann die Teilchengröße zuverlässig eingestellt werden. Allerdings ist die Herstellung eines Saat-Polymeren recht aufwendig und sichert nicht, dass die Polymerisation zuverlässig startet und anhält. In der gleichen Veröffentlichung wird anhand von NMR- und DSC-Spektren belegt, dass bei Vorlegen der (Meth)Acrylate und Dosierung des Vinylchlorids uneinheitliche Copolymere entstehen.

In der US3,702,785 und GB1365363 wird 1 Gew-% bis 4 Gew-% der Monomere in emulgierter Form und ein Teil des Initiators vorgelegt. Wenn sich eine Reaktion entwickelt hat, wird die restliche Monomermenge als Premix in vier bis sechs Stunden zudosiert. Der Nachteil des Verfahrens besteht darin, dass durch zu frühes oder zu spätes Nachführen des Premix und des Initiators die Reaktion zum Erliegen kommen kann.

In der JP61207417 wird die Herstellung einer stabilen Vinylchlorid-Acrylat-Copolymer Dispersion beschrieben. In der Anfangsphase wird Vinylchlorid polymerisiert und nach dem Start der Reaktion Acrylat nachgeführt. Auch dieses Verfahren sichert nicht einen gleichmäßigen und reproduzierbaren Polymerisationsverlauf.

Ziel der vorliegenden Erfindung ist es ein Verfahren zur Herstellung von Vinylchlorid-(Meth)Acrylat-Copolymeren bereit zu stellen, die gegebenenfalls noch ein oder mehrere Comonomere enthalten, das die geschilderten Nachteile des Standes der Technik nicht aufweist.

Dieses Ziel wird erreicht durch ein Verfahren gemäß Anspruch 1. Bevorzugte Ausführungsformen sind den Unteransprüchen zu entnehmen.

Ein Vorteil der Erfindung ist es, dass die Polymerisation zuverlässig startet, wenn 5 Gew-% bis 10 Gew-% der Monomere bezogen auf die Menge an Gesamtmonomer im Polymerisationsreaktor vorgelegt werden und der Anteil an Vinylchlorid an den Monomeren in der Vorlage zwischen 50 Gew-% und 100 Gew-% liegt. Nach Beginn der Initiatorzudosierung wird mit der Emulgatordosierung erst nach einem Abfall des Ausgangsdrucks um 0,5 bar bis 1,0 bar begonnen. Nach Abfall des Ausgangsdrucks um insgesamt 1,5 bar bis 3,5 bar wird mit der Dosierung der Monomere begonnen. Die Messkurven der Glasübergangstemperatur der so hergestellten Polymere durch Differentialkalorimetrie zeigen nur einen Glasübergang an, wodurch belegt wird, dass die Ketten gleichmäßig aufgebaut sind.

### Monomere:

Ziel der Erfindung ist die Herstellung von Vinylchlorid-(Meth)Acrylat-Copolymeren mit einer gleichmäßigen Verteilung der verschiedenen Monomere in der Kette. Für die Copolymerisation geeignete (Meth)Acrylate sind alle Acrylsäure- und Methacrylsäureester von Alkoholen mit 1 bis 18 Kohlenstoffatomen in der Alkylkette. Das Verhältnis Vinylchlorid zu (Meth)Acrylat, bzw. mehreren verschiedenen (Meth)Acrylaten kann 95:5 bis 5:95 betragen, vorzugsweise liegt das Verhältnis bei 70 : 30 oder 50: 50. 5 Gew-% bis 10 Gew-% der Monomeren werden vorgelegt, wobei der Anteil an Vinylchlorid an den vorgelegten Monomeren 50 Gew-% bis 100 Gew-% beträgt. Die restlichen Monomeren werden zudosiert. Die Dosiergeschwindigkeit ist so angepasst, dass sich kein größeres Monomerpolster bildet.

### Comonomere:

Die Eigenschaften des Copolymers kann durch Einbau von 0,01 bis 10 Gew-% bezogen auf die Menge an Gesamtmonomer eines oder mehrerer funktioneller Comonomere modifiziert werden. Geeignete Comonomere sind Acrylsäure, Methacrylsäure, Itakonsäure, Maleinsäureanhydrid, Maleinsäuremonoalkylester, Maleinsäuredialkylester, Fumarsäure, Acrylamid, Methacrylamid, N-Methylolacrylamid, N-Methylolmethacrylamid oder Ester des N-Methylolacrylamids oder N-Methylolmethacrylamids, Glycidylmethacrylat, Glycidylacrylat, siliciummodifizierte Vinylverbindungen wie bspw. Vinyltrialkoxysilane und Vinylmethyldialkoxysilane, wobei die Alkoxygruppen bspw. Ethoxy- und Ethoxypropylenglykolester sein können, des weiteren sind ethylenisch ungesättigte Sulfonsäure bzw. deren Salze, vorzugsweise Vinylsulfonsäure und 2-Acrylamido-2-methylpropansulfonsäure geeignet. Weitere Beispiele sind vorvernetzende Comonomere wie mehrfach ethylenisch ungesättigte Comonomere, z.B. Divinyladipat, Diallylmaleat, Allylmethacrylat. Eines oder mehrere Comonomere können in einer Menge von 0,01 bis 10 Gew-% bezogen auf die Menge an Gesamtmonomer eingesetzt werden. Die Zugabe der Comonomere erfolgt in Form einer Mischung mit (Meth)Acrylat oder jedes der Monomere separat.

Die Glasübergangstemperatur des Polymers wird durch die Zusammensetzung des Copolymers eingestellt und kann durch die Fox-Flory-Gleichung berechnet werden. Das erfindungsgemäße Verfahren erlaubt die Einstellung einer Glasübergangstemperatur von -40°C bis +80°C. Bevorzugt wird eine Glasübergangstemperatur von 0°C bis +40°C eingestellt.

Durch puffernde Substanzen oder Basen kann der pH-Wert während des Verlaufs der Polymerisation kontrolliert werden. Geeignete Substanzen sind Essigsäure, Ameisensäure, Natriumhydrogencarbonat, Natriumcarbonat, Trikaliumphosphat, Tetranatriumdiphosphat, Natronlauge, Ammoniak, Triethanolamin, Diethanolamin, etc. Die fertige Dispersion wird mit Ammoniak, Natronlauge, Kalilauge, oder ähnlichem auf einen pH-Wert von 6 bis 9 eingestellt.

Mit dem erfindungsgemäßen Verfahren kann in der entstehenden Dispersion eine Teilchengröße von 20 nm bis 400 nm eingestellt werden. Entscheidend für die Einstellung der Teilchengröße sind die Emulgatormenge in der Vorlage und im Zulauf sowie die Zugabegeschwindigkeit des dosierten Emulgators.

Geeignete Initiatoren für die Reaktion sind Ammonium-, Natrium- und Kaliumperoxodisulfat, jeweils allein oder in Kombination mit Wasserstoffperoxid, oder anderen organischen Peroxiden und Azoverbindungen. Es ist auch möglich Reduktionsmittel, wie bspw. Ascorbinsäure, Zitronensäure, Natriumformaldehydsulfoxylat, etc. zu verwenden. Der Initiator kann allein oder in Kombination mit einem Reduktionsmittel teilweise oder vollständig vorgelegt werden oder vollständig zudosiert werden. Die Zugabe des Initiators erfolgt erst, wenn 5 Gew-% bis 10 Gew-% der Gesamtmonomere vorgelegt wurden.

Die Polymerisationstemperatur wird so gewählt, dass eine optimale Polymerisationsgeschwindigkeit erreicht wird. Sie kann zwischen 30°C und 90°C liegen. Vorzugsweise liegt die Polymerisationstemperatur zwischen 60°C und 85°C. Die Temperatur kann über den gesamten Polymerisationsverlauf konstant gehalten oder variiert werden.

Geeignete ionische Emulgatoren sind Salze der Alkyl- und Arylsulfonate oder -sulfate und -carboxylate, Alkylethersulfate, alkylierte Diarylsulfonsäureether, Sulfonsuccinimide, Fettsäuren, Alkylphenolethersulfate, etc.

Geeignete nichtionische Emulgatoren schließen Fettalkoholpolyethylenglykolether mit 2-22 Kohlenstoffatomen in der Kette eines linearen oder verzweigten Alkohols und 1 bis 100 Ethylenoxideinheiten in der Ethylenoxidkette, Alkylphenolpolyethylenglycolether, Alkylphenolpolypropylenglycolether, Polyethylenoxid-Polypropylenoxid Blockcopolymere, Polyvinylalkohol, etc. ein, ohne auf diese beschränkt zu sein.

Die Dispersionen, die nach dem erfindungsgemäßen Verfahren hergestellt werden, haben einen Feststoffgehalt von 25 Gew-% bis 65 Gew.-% und vorzugsweise einen Feststoffgehalt von 45 Gew-% bis 55 Gew-%.

Durch Verbindungen mit hoher Radiklaübertragungsrate, wie bspw. t-Dodecylmercaptan, n-Dodecylmercaptan, Mercaptoethanol, Mercaptopropionsäure, Mercaptopropionsäuremethylester, Triethanolamin, kann das Molekulargewicht des entstehenden Polymers beeinflusst werden.

Die folgenden Beispiele dienen zur Erläuterung des erfindungsgemäßen Verfahrens:

### Beispiel 1:

In einem 10 l Druckautoklaven, der mit Mantelkühlung und Rührwerk ausgestattet war, wurden 1883,0 g Wasser, 182,3 g Vinylchlorid, 7,29 g einer 15%igen Marlon A315 Lösung (Natrium-Arylsulfonat) und 1,09 g Ascorbinsäure vorgelegt. Die Vorlage wurde auf 75°C aufgeheizt und nach Erreichen einer konstanten Temperatur wurde mit der Zugabe von 729,2 Ammoniumperoxodisulfat (1,0 %ige Lösung) mit einer Dosierzeit von 360min begonnen. Nach 21 min, als der Ausgangsdruck im Autoklaven von 10,0 bar unter 9,5 bar gesunken war, wurde mit der Zugabe von 729,2 g Marlon A 315 (5,0 %ige Lösung) begonnen, welches innerhalb von 330 min zugegeben wurde. Nach weiteren 28 min, als der Druck im Autoklaven unter 8,5 bar gefallen war, wurde mit der Zugabe von 1094,0 g Butylacrylat, 40,51 g Acrylsäure und 2333,0 g Vinylchlorid begonnen. Die Acrylsäure wurde mit dem Butylacrylat gemischt und innerhalb von 360 min zudosiert. Das Vinylchlorid wurde aus einer Druckflasche ebenfalls in 360 min dosiert. Mit dem Beginn der Zugabe des Vinylchlorids stieg der Druck im Autoklav zunächst an, blieb aber nach kurzer Zeit über die gesamte Dosierdauer konstant. Nach Abschluss der Dosierung der gesamten Monomere wurde noch für 2h die Temperatur bei 75°C gehalten, um den Umsatz zu erhöhen und den Restmonomerengehalt zu reduzieren. Anschließend wurde auf Raumtemperatur gekühlt und der Ansatz aufgearbeitet.

Die Dispersion war frei von Stippen und Koagulat. Der Feststoffgehalt betrug 53,2 %, die Oberflächenspannung 53,9 mN/m und der pH-Wert 1,6. Der pH-Wert wurde mit Ammoniak auf 8,5 eingestellt. Die Oberflächenspannung betrug dann 44,5 mN/m. Mit einem Microtrac Particle Analyzer UPA 150 wurde eine enge Teilchengrößenverteilung mit einem D₅₀-Wert von 159 nm gemessen. Ein mit einem Vierkantrakel (Spaltweite 150 µm) gerakelter Film war klar und frei von Stippen. Ein 0,3 mm dicker Film, hergestellt in einer Petri-Schale, war klar und durchsichtig. Die Filme wurden bei 50°C hergestellt. Die Glasübergangstemperatur wurde durch Differentialthermoanalyse bestimmt und betrug 40°C. Das Messdiagramm zeigt nur einen Glasübergangspunkt an. Die Dispersion konnte für 60 min in einer Rührvorrichtung mit 3000 Upm geschert werden, ohne zu koagulieren.

### Beispiel 2:

In einem 10 l Druckautoklaven, der mit Mantelkühlung und Rührwerk ausgestattet war, wurden 1883,0 g Wasser, 182,3 g Vinylchlorid, 7,29 g einer 15%igen Marlon A315 Lösung (Natrium-Arylsulfonat)und 1,09 g Ascorbinsäure vorgelegt. Die Vorlage wurde auf 75°C aufgeheizt und bei Erreichen einer konstanten Temperatur wurde mit der Zugabe von 729,2 g Ammoniumperoxodisulfat (1 %ige Lösung) in begonnen, welche innerhalb von 360 min zugegeben wurde. Nach 40 min, als der Ausgangsdruck im Autoklaven von 9,8 bar unter 9,3 bar gesunken war, wurde mit der Zugabe von 729,2 g Marlon A 315 (5,0 %ige Lösung) begonnen, welches ebenfalls innerhalb von 330 min zugegeben wurde. Nach weiteren 31 min, als der Druck unter 8,3 bar gefallen war, wurde mit der Zugabe von 1458,0 g Butylacrylat, 40,51 g Acrylsäure und 1969,0 g Vinylchlorid begonnen. Die Acrylsäure wurde mit dem Butylacrylat gemischt und innerhalb von 360 min zudosiert. Das Vinylchlorid wurde aus einer Druckflasche ebenfalls innerhalb von 360 min zudosiert. Mit dem Beginn der Zugabe des Vinylchlorids stieg der Druck zunächst an, blieb aber nach kurzer Zeit über die gesamte Dosierdauer konstant. Nach Abschluss der Dosierung der gesamten Monomere wurde noch für 2h die Temperatur bei 75°C gehalten, um den Umsatz zu erhöhen und den Restmonomerengehalt zu reduzieren. Anschließend wurde auf Raumtemperatur gekühlt und der Ansatz aufgearbeitet.

Die Dispersion war frei von Stippen und Koagulat. Der Feststoffgehalt betrug 52,8 %, die Oberflächenspannung 53,4 mN/m und der pH-Wert 1,6. Der pH-Wert wurde mit Ammoniak auf 8,5 eingestellt. Die Oberflächenspannung betrug dann 42,8 mN/m. Mit einem Microtrac Particle Analyzer UPA 150 wurde eine enge Teilchengrößenverteilung mit einem D₅₀-Wert von 157 nm gemessen. Ein mit einem Vierkantrakel (Spaltweite 150 µm) gerakelter Film war klar und frei von Stippen. Ein 0,3 mm dicker Film, hergestellt in einer Petri-Schale, war klar und durchsichtig. Die Filme wurden bei 50°C hergestellt. Die Glasübergangstemperatur wurde durch Differentialthermoanalyse bestimmt und betrug 32°C. Das Messdiagramm zeigte nur einen Glasübergangspunkt an. Die Dispersion konnte für 60 min in einer Rührvorrichtung mit 3000 Upm geschert werden, ohne zu koagulieren.

### Beispiel 3:

In einem 10 l Druckautoklaven, der mit Mantelkühlung und Rührwerk ausgestattet war, wurden 2038,0 g Wasser, 176,8 g Vinylchlorid, 7,07 g einer 15%igen Marlon A315 Lösung (Natrium-Arylsulfonat) und 1,06 g Ascorbinsäure vorgelegt. Die Vorlage wurde auf 75°C aufgeheizt und bei Erreichen einer konstanten Temperatur wurde mit der Zugabe von 707,1 g Ammoniumperoxodisulfat (1 %ige Lösung) begonnen, welches innerhalb von 355 min zugegeben wurde. Nach 25min, als der Ausgangsdruck im Autoklaven von 10,2 bar unter 9,7 bar gesunken war, wurde mit der Zugabe von 707,1 g Marlon A 315 (5,0 %ige Lösung) begonnen, welches innerhalb von 330 min zugegeben wurde. Nach weiteren 25 min, als der Druck im Autoklaven unter 8,5 bar gefallen war, wurde mit der Zugabe von 1768,0 g Butylacrylat, 39,28 g Acrylsäure und 1556,0 g Vinylchlorid begonnen. Die Acrylsäure wurde mit dem Butylacrylat gemischt und innerhalb von 360 min zudosiert. Das Vinylchlorid wurde aus einer Druckflasche ebenfalls innerhalb von 360 min zudosiert. Mit dem Beginn der Zugabe des Vinylchlorids stieg der Druck zunächst an, blieb aber nach kurzer Zeit über die gesamte Dosierdauer konstant. Nach Abschluss der Dosierung der gesamten Monomere wurde noch für 2h die Temperatur bei 75°C gehalten, um den Umsatz zu erhöhen und den Restmonomerengehalt zu reduzieren. Anschließend wurde auf Raumtemperatur gekühlt und der Ansatz aufgearbeitet.

Die Dispersion war frei von Stippen und Koagulat. Der Feststoffgehalt betrug 51,3 %, die Oberflächenspannung 53,0 mN/m und der pH-Wert 1,7. Der pH-Wert wurde mit Ammoniak auf 8,5 eingestellt. Die Oberflächenspannung betrug dann 46,2 mN/m. Mit einem Microtrac Particle Analyzer UPA 150 wurde eine enge Teilchengrößenverteilung mit einem D₅₀-Wert von 160 nm gemessen. Ein mit einem Vierkantrakel (Spaltweite 150 µm) gerakelter Film war klar und frei von Stippen. Ein 0,3 mm dicker Film, hergestellt in einer Petrischale, war klar und durchsichtig. Die Glasübergangstemperatur wurde durch Differentialthermoanalyse bestimmt und betrug 17°C. Das Messdiagramm zeigte nur einen Glasübergangspunkt an. Die Dispersion konnte für 40 min in einer Rührvorrichtung mit 3000 Upm geschert werden, ohne zu koagulieren.

### Beispiel 4:

In einem 10 l Druckautoklaven, der mit Mantelkühlung und Rührwerk ausgestattet war, wurden 1708,0 g Wasser, 197,5 g Vinylchlorid, 3,18g Acrylsäure, 85,88 g Butylacrylat, 5,73 g einer 15%igen Marlon A315 Lösung (Natrium-Arylsulfonat) und 0,86 g Ascorbinsäure vorgelegt. Die Vorlage wurde auf 75°C aufgeheizt und bei Erreichen einer konstanten Temperatur wurde mit der Zugabe von 572,6 Ammoniumperoxodisulfat (1,0 %ige Lösung) begonnen, welches innerhalb von 420 min zugegeben wurde. Nach 31 min, als der Ausgangsdruck im Autoklaven von 9,6 bar unter 8,8 bar gesunken war, wurde mit der Zugabe von 572,6 g Marlon A 315 (5,0 %ige Lösung) begonnen, welches innerhalb von 360 min zugegeben wurde. Nach weiteren 19 min, als der Druck im Autoklaven unter 6,8 bar gefallen war, wurde mit der Zugabe von 773,0 g Butylacrylat, 28,63 g Acrylsäure und 1778,0 g Vinylchlorid begonnen. Die Acrylsäure wurde mit dem Butylacrylat gemischt und innerhalb von 360 min zudosiert. Das Vinylchlorid wurde aus einer Druckflasche ebenfalls innerhalb von 360 min zudosiert. Mit dem Beginn der Zugabe des Vinylchlorids stieg der Druck zunächst an, blieb aber nach kurzer Zeit über die gesamte Dosierdauer konstant. Nach Abschluss der Dosierung der gesamten Monomere wurde noch für 2h die Temperatur bei 75°C gehalten, um den Umsatz zu erhöhen und den Restmonomerengehalt zu reduzieren. Anschließend wurde auf Raumtemperatur gekühlt und der Ansatz aufgearbeitet.

Die Dispersion war frei von Stippen und Koagulat. Der Feststoffgehalt betrug 39,6 %, die Oberflächenspannung 49,2 mN/m und der pH-Wert 1,7. Der pH-Wert wurde mit Ammoniak auf 8,5 eingestellt. Die Oberflächenspannung betrug dann 37,7 mN/m. Mit einem Microtrac Particle Analyzer UPA 150 wurde eine enge Teilchengrößenverteilung mit einem D₅₀-Wert von 186 nm gemessen. Ein mit einem Vierkantrakel (Spaltweite 150 µm) gerakelter Film war klar und frei von Stippen. Ein 0,3 mm dicker Film, hergestellt in einer Petrischale, war klar und durchsichtig. Die Filme wurden bei 50°C hergestellt. Die Glasübergangstemperatur wurde durch Differentialthermoanalyse bestimmt und betrug 40°C. Das DSC-Diagramm zeigte nur einen Glasübergangspunkt an. Die Dispersion konnte für 60 min in einer Rührvorrichtung mit 3000 Upm geschert werden, ohne zu koagulieren.

### Beispiel 5:

In einem 10 l Druckautoklaven, der mit Mantelkühlung und Rührwerk ausgestattet war, wurden 2028,0 g Wasser, 184,2 g Vinylchlorid, 7,37 g einer 15%igen Marlon A315 Lösung (Natrium-Arylsulfonat) und 1,11 g Ascorbinsäure vorgelegt. Die Vorlage wurde auf 75°C aufgeheizt und bei Erreichen einer konstanten Temperatur mit der Zugabe von 245,6 g Ammoniumperoxodisulfat (3 %ige Lösung) begonnen, welches innerhalb von 355 min zugegeben wurde. Nach 20 min, als der Ausgangsdruck von 10,0 bar unter 9,5 bar gesunken war, wurde mit der Zugabe von 736,9 g Marlon A 315 (5,0 %ige Lösung) begonnen, welches innerhalb von 330 min zugegeben wurde. In die Marlondosierung wurden noch 14,74 g einer 25 %igen Ammoniaklösung zugegeben. Nach weiteren 11 min, als der Druck unter 8,5 bar gefallen war, wurde mit der Zugabe von 1695,0 g Ethylhexylacrylat, 37,21 g Acrylsäure und 1768,0 g Vinylchlorid begonnen. Die Acrylsäure wurde mit dem Ethylhexylacrylat gemischt und innerhalb von 300 min zudosiert. Das Vinylchlorid wurde aus einer Druckflasche ebenfalls innerhalb von 300 min zudosiert. Mit dem Beginn der Zugabe des Vinylchlorids stieg der Druck zunächst an, blieb aber nach kurzer Zeit über die gesamte Dosierdauer konstant. Nach Abschluss der Dosierung der gesamten Monomere wurden nochmals 29,47 g einer 25 %igen Ammoniaklösung über eine Druckschleuse "im Schuss" auf einmal zugegeben und noch für 2h die Temperatur bei 75°C gehalten, um den Umsatz zu erhöhen und den Restmonomerengehalt zu reduzieren. Anschließend wurde auf Raumtemperatur gekühlt und der Ansatz aufgearbeitet.

Die Dispersion war frei von Stippen und Koagulat. Der Feststoffgehalt betrug 53,1 %, die Oberflächenspannung 54,2 mN/m und der pH-Wert 8,2. Mit einem Microtrac Particle Analyzer UPA 150 wurde eine enge Teilchengrößenverteilung mit einem D₅₀-Wert von 158 nm gemessen. Ein mit einem Vierkantrakel (Spaltweite 150 µm) gerakelter Film war klar und frei von Stippen. Ein 0,3 mm dicker Film, hergestellt in einer Petrischale, war klar und durchsichtig. Die Glasübergangstemperatur wurde durch Differentialthermoanalyse bestimmt und betrug 15°C. Das Messdiagramm zeigte nur einen Glasübergangspunkt an. Die Dispersion konnte für 15 min in einer Rührvorrichtung mit 3000 Upm geschert werden, ohne zu koagulieren. Durch Zugabe von 2 Gew-% bezogen auf den Festkörpergehalt der Dispersion eines C₁₃-Polyethylenglycolethers wurde die Rührstabilität erhöht, so dass 60 min keine Koagulation eintrat.

Die Beispiele zeigen, dass die Ansätze leichte Unterschiede aufweisen, je nachdem, wann die Reaktion nach Zugabe des Initiators einsetzt. Durch die Steuerung der Emulgator- und Monomerdosierungen über den Druck gelingt es immer zuverlässig eine Reaktion aufzubauen und eine enge Teilchengrößenverteilung zu erhalten. Das folgende Vergleichsbeispiel soll verdeutlichen, dass das nicht der Fall ist, wenn nicht so verfahren wird.

### Vergleichsbeispiel: Ohne Monomere in der Vorlage

In einem 10 l Druckautoklaven, der mit Mantelkühlung und Rührwerk ausgestattet war, wurden 1708,0 g Wasser, 5,73 g einer 15%igen Marlon A315 Lösung (Natrium-Arylsulfonat) und 0,86 g Ascorbinsäure vorgelegt. Die Vorlage wurde auf 75°C aufgeheizt und bei Erreichen einer konstanten Temperatur wurde mit der Zugabe von 572,6 Ammoniumperoxodisulfat (1,0 %ige Lösung) begonnen, welches innerhalb von 360 min zugegeben wurde. Nach 10 min wurde mit der Zugabe von 858,8 g Butylacrylat, 31,81 g Acrylsäure, 1975,0 g Vinylchlorid und 1847,0 g Marlon A 315 (1,55 %ige Lösung) begonnen, welches ebenfalls innerhalb von 360 min zugegeben wurde. Die Acrylsäure wurde mit dem Butylacrylat gemischt. Das Vinylchlorid und das Marlon A315 wurden separat dosiert. Nach 30 min wurden die Monomer- und Emulgatordosierungen unterbrochen, weil sich bis dahin keine Reaktion aufgebaut hatte. Der Initiator wurde weiter dosiert. Nach weiteren 10 min wurde die Dosierung der Monomere immer wieder für 15 fortgesetzt und dann wieder für 15 min bis 30min unterbrochen. Nach 141 min setzte an der Manteltemperatur erkennbar (Die Manteltemperatur liegt unterhalb der Innentemperatur) eine Reaktion ein und die Emulgatordosierung wurde fortgesetzt. Der Versuch wurde abgebrochen, weil aufgrund des großen Monomerpolsters kein statistischer Einbau der Monomere in die Polymerkette zu erwarten war.

Das Vergleichsbeispiel verdeutlicht, dass bei der Emulsionspolymerisation von Vinylchlorid mit Acrylaten sich der Start der Polymerisation sehr verzögern kann, wodurch die Herstellung eines homogenen Produkts erschwert wird. Durch das erfindungsgemäße Verfahren wird ein reproduzierbarer Ablauf mit konstanten Ergebnissen möglich. Der Zulauf der Monomere konnte in allen Beispielen des erfindungsgemäßen Verfahrens immer 50 min bis 70 min nach Initiatorzugabe gestartet werden.

## Patentansprüche

1. Verfahren zur Herstellung von wässrigen Dispersionen von Copolymeren auf Basis von mindestens zwei Monomeren, ausgewählt aus Vinylchlorid und (Meth)Acrylsäureestern in Gegenwart von Hilfsstoffen und gegebenenfalls weiteren Comonomeren in einer Menge von 0,1 Gew-% bis 10 Gew-% bezogen auf die Gesamtmenge an Monomeren in semikontinuierlicher Verfahrensweise, **dadurch gekennzeichnet, dass** 5 Gew-% bis 10 Gew-% der gesamten Monomere im Polymerisationsreaktor vorgelegt werden, wobei der Anteil an Vinylchlorid an den vorgelegten Monomeren 30 Gew-% bis 100 Gew-% beträgt und nach Zugabe des Initiators erst nach einem Druckabfall von 0,5 bar bis 1,5 bar im Polymerisationsreaktor mit der Dosierung des Emulgators begonnen wird und nach einem Druckabfall von 1,5 bar bis 3,5 bar gegenüber dem Ausgangsdruck im Polymerisationsreaktor mit der Zugabe der Monomere begonnen wird.

2. Verfahren nach Anspruch 1, **dadurch gekennzeichnet, dass** als eines der Monomeren (Meth)Acrylsäureester von Alkoholen mit 1 bis 18 C-Atomen verwendet werden.

3. Verfahren nach Anspruch 2, **dadurch gekennzeichnet, dass** Methylmethacrylat, Methylacrylat, Ethylmethacrylat, Ethylacrylat, Propylacrylat, Propylmethacrylat, n-Butylacrylat, t-Butylacrylat, n-Butylmethacrylat, t-Butylmethacrylat oder 2-Ethylhexylacrylat oder Mischungen daraus eingesetzt werden.

4. Verfahren nach einem der Ansprüche 1 bis 3, **dadurch gekennzeichnet, dass** als Initiatoren für die Polymerisation Natrium-, Kalium- oder Ammoniumperoxodisulfat, Peroxide, Hydroperoxide, Wasserstoffperoxid, jeweils allein oder in Kombination eingesetzt werden.

5. Verfahren nach einem der Ansprüche 1 bis 4, **dadurch gekennzeichnet, dass** als Comonomere Acrylsäure, Methacrylsäure, Fumarsäure, Maleinsäure, Maleinsäuremonoalkylester, Itakonsäure, Hydroxyethylmethacrylat, Hydroxyethylacrylat, Acrylamid, Methacrylamid, N-Methylolacrylamid, N-Methylolmethacrylamid, Vinyltriethoxysilan, Vinyltrimethoxysilan, Glycidylacrylat, Glycidylmethacrylat allein oder in Mischung eingesetzt werden.

6. Verfahren nach einem der Ansprüche 1 bis 5, **dadurch gekennzeichnet, dass** die Polymerisationstemperatur zwischen 30°C und 90°C liegt.

7. Verfahren nach einem der Ansprüche 1 bis 6, **dadurch gekennzeichnet, dass** im Reaktionsansatz als anionische Emulgatoren Alkali- und Ammoniumsalze von Fettsäuren, Alkylsulfonaten, Arylsulfonaten, Alkylsulfaten, Alkyl-Diarylsulfonether, Alkylethersulfate, Alkylphenolethersulfate oder ähnliche verwendet werden.

8. Verfahren nach einem der Ansprüche 1 bis 7, **dadurch gekennzeichnet, dass** im Reaktionsansatz als nichtionische Emulgatoren Fettalkoholpolyethylenglykolether mit 2-22 Kohlenstoffatomen in der Kette eines linearen oder verzweigten Alkohols und 1 bis 100 Ethylenoxideinheiten in der Ethylenoxidkette, Alkylphenolpolyethylenglycolether, Alkylphenolpolypropylenglycolether, Polyethylenoxid-Polypropylenoxid Blockcopolymere, Polyvinylalkohol oder ähnliche verwendet werden.

9. Verwendung einer Dispersion, hergestellt nach einem der Ansprüche 1 bis 8, zur Herstellung von Klebstoffzusammensetzungen, Spachtelmassen, Kunststoffputzen, Dispersionsfarben, Dispersionslacke, Grundierungen, Papierstreichfarben, Teppichrückenbeschichtungen, Handschuhen, etc.

10. Verwendung der Dispersion gemäß Anspruch 9 in wässriger Form.
